# EUROPEAN PATENT APPLICATION

(11) **EP 4 818 491 A1**
(43) Date of publication of application: **07.10.2026**
(21) Application number: 26169996.1
(22) Date of filing: 31.03.2026
(51) Int. Cl.: F02C 6/20, B64D 27/33, F02C 7/04, F02C 7/32, F02K 5/00

(54) **AIRCRAFT HYBRID ELECTRIC PROPULSION SYSTEM**

(30) Priority: 04.04.2025 US 202519170862
(71) Applicant: Pratt & Whitney Canada Corp., Longueuil, Québec J4G 1A1 (CA)
(72) Inventor: BRITO, Roberto, (01BE5) Longueuil, J4G 1A1 (CA); CHATELOIS, Bruno, (01BE5) Longueuil, J4G 1A1 (CA); WEAVER, Paul, (01BE5) Longueuil, J4G 1A1 (CA); DUROCHER, Eric S., (01BE5) Longueuil, J4G 1A1 (CA)
(74) Representative: Dehns

(57) **Abstract**

A hybrid-electric propulsion (HEP) system (20) for powering an aircraft is provided. The HEP system (20) includes an inlet case (28), an engine output shaft (48), a gearbox (26), a gas turbine engine (22), an electric motor (24; 24A), and a gear system (54; 54A, 54B). The inlet case (28) forms a cavity (58) of the HEP system (20). The engine output shaft (48) is disposed within the cavity (58) and extends axially along a first rotational axis (62). The gearbox (26) is in drive communication with the engine output shaft (48), and the gas turbine engine (22) in drive communication with the engine output shaft (48). The electric motor (24; 24A) is in drive communication with the engine output shaft (48). At least a portion of the electric motor (24; 24A; 24B) is disposed within the cavity (58). The gear system (54; 54A, 54B) is configured to rotatably engage the electric motor (24; 24A) with the engine output shaft (48).

## Description

### Technical Field

The present disclosure relates to aircraft propulsion systems in general, and to aircraft hybrid-electric propulsion systems in particular.

### Background Information

A hybrid electric propulsion ("HEP") system for an aircraft includes a thermal engine (e.g., a gas turbine engine) and at least one electric motor for providing motive force for an aircraft. The electric motor can be situated to provide rotational drive to the thermal engine or to a gearbox. What is needed is a system and method for providing rotational drive from an electric motor within a HEP system that is an improvement over existing systems and methods.

### SUMMARY

According to an aspect of the present invention, a hybrid-electric propulsion (HEP) system for powering an aircraft is provided. The HEP system includes an inlet case, an engine output shaft, a gearbox, a gas turbine engine, an electric motor, and a gear system. The inlet case forms a cavity of the HEP system. The engine output shaft is disposed within the cavity and extends axially along a first rotational axis. The gearbox is in drive communication with the engine output shaft, and the gas turbine engine in drive communication with the engine output shaft. The electric motor is in drive communication with the engine output shaft. At least a portion of the electric motor is disposed within the cavity. The gear system is configured to rotatably engage the electric motor with the engine output shaft.

In an embodiment of the above, the HEP system is configured to operate in a first mode of operation, a second mode of operation, or a third mode of operation. In the first mode of operation, the gas turbine engine is controlled to provide rotational drive to the engine output shaft and the electric motor is controlled to not operate. In the second mode of operation, the gas turbine engine is controlled to provide a first rotational drive to the engine output shaft and the electric motor is controlled to provide a second rotational drive to the engine output shaft. In the third mode of operation, the gas turbine engine is controlled to provide rotational drive to the engine output shaft and the electric motor is controlled to produce electrical energy. In the third mode of operation, the electric motor is driven by the engine output shaft.

In an embodiment according to any of the previous embodiments, the electric motor extends axially along a second rotational axis disposed within the cavity. The second rotational axis may be laterally offset from the engine output shaft, and may be parallel to the first rotational axis.

In an embodiment according to any of the previous embodiments, the electric motor is supported within the inlet case by an inlet case accessory mount. The electric motor may extend radially along a second rotational axis such that the electric motor extends within and protrudes from the inlet case. The gear system may include a first bevel gear and a second bevel gear. The first bevel gear may be mounted to and rotatable with the electric motor along the second rotational axis. The second bevel gear may be engaged with the first bevel gear, and the second bevel gear may be in rotational communication with the engine output shaft. The second rotational axis may be angularly offset from the first rotational axis.

In an embodiment according to any of the previous embodiments, the HEP system includes a second electric motor. At least a portion of the second electric motor may be disposed within the cavity. The gear system may be configured to rotatably engage the second electric motor with the engine output shaft.

According to another aspect of the present invention, a hybrid-electric propulsion (HEP) system for powering an aircraft is provided. The HEP system includes a reduction gearbox, an inlet case, an engine output shaft, a gas turbine engine, an electric motor, a gear system, and a controller. The inlet case forms a cavity of the HEP system. The engine output shaft is disposed within the cavity and extends axially along a first rotational axis. The engine output shaft rotatably engages with the reduction gearbox. The gas turbine engine is in drive communication with the engine output shaft. At least a portion of the electric motor is disposed within the cavity. The gear system is configured to rotatably engage the electric motor with the engine output shaft. The HEP system is configured to operate in a first mode of operation, or a second mode of operation, one at a time. In the first mode of operation, the gas turbine engine is controlled to provide rotational drive to the reduction gearbox through the engine output shaft, and the electric motor is controlled to not operate. In the second mode of operation, the gas turbine engine is controlled to provide a first rotational drive to the reduction gearbox through the engine output shaft and the electric motor is controlled to provide a second rotational drive to the reduction gearbox through the engine output shaft. The controller is in communication with the electric motor and a non-transitory memory storing instructions. The instructions when executed cause the system controller to selectively operate the HEP system in one of the first mode of operation or the second mode of operation, and then to subsequently operate the HEP system in another of the first mode of operation or the second mode of operation.

In an embodiment of the above, the electric motor extends axially along a second rotational axis disposed within the cavity. The second rotational axis may be laterally offset from the engine output shaft. The second rotational axis may be parallel to the first rotational axis.

In an embodiment according to any of the previous embodiments, the electric motor is supported within the inlet case by an inlet case accessory mount. The electric motor may extend radially along a second rotational axis. The electric motor may extend within and protrude from the inlet case. The gear system may include a first bevel gear and a second bevel gear. The first bevel gear may be mounted to and rotatable with the electric motor along the second rotational axis. The second bevel gear may be engaged with the first bevel gear and rotatable with the engine output shaft. The second rotational axis may be angularly offset from the first rotational axis.

In an embodiment according to any of the previous embodiments, the HEP system may include a second electric motor. At least a portion of the second electric motor may be disposed within the cavity. The gear system may be configured to rotatably engage the second electric motor with the engine output shaft.

In an embodiment according to any of the previous embodiments, the gear system may comprise a drive gear, an intermediary gear, and a motor gear. The drive gear may be mounted on the engine output shaft and rotatable about the first rotational axis. The intermediary gear may be rotatable about an intermediary rotational axis, and may rotatably engaged with the drive gear. The motor gear may be mounted on the electric motor. The motor gear may be rotatably engaged with the intermediary gear. The motor gear may be configured to rotate about a second rotational axis.

According to another aspect of the present invention, an assembly for a hybrid-electric propulsion (HEP) system for powering an aircraft is provided. The HEP system includes an inlet case, an engine output shaft, a gearbox, an electric motor, and a gear system. The inlet case may form a cavity. The engine output shaft may be disposed within the cavity and may extend axially along a first rotational axis. The gearbox may be in drive communication with the engine output shaft, and may be configured to drive rotation of a propulsion unit. The electric motor may be in drive communication with the engine output shaft. At least a portion of the electric motor may be disposed within the cavity. The gear system may be configured to rotatably engage the electric motor with the engine output shaft.

In an embodiment of the above, a rotational speed of the electric motor is equal to a rotational speed of the engine output shaft, and a rotational output speed of the gearbox is less than the rotational speed of the electric motor.

In an embodiment according to any of the previous embodiments, the gear system includes a drive gear, an intermediary gear, and a motor gear. The drive gear may be mounted on the engine output shaft and rotatable about the first rotational axis. The intermediary gear may be rotatably engaged with the drive gear, and rotatable about an intermediary rotational axis. The motor gear may be mounted on the electric motor, and may be rotatably engaged with the intermediary gear. The motor gear may be configured to rotate about a second rotational axis. The first rotational axis may be parallel to the intermediary axis or the second rotational axis.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic view of a present disclosure hybrid-electric propulsion system embodiment.
FIG. 2 is a cross-sectional diagrammatic view of a portion of the present disclosure hybrid-electric propulsion system embodiment of FIG. 1, along lines 2-2.
FIG. 2A is a diagrammatic perspective view of a present disclosure gear system embodiment.
FIG. 3 is a diagrammatic view of a present disclosure hybrid-electric propulsion system embodiment.
FIG. 4 is a cross-sectional diagrammatic view of a portion of the present disclosure hybrid-electric propulsion system embodiment of FIG. 3, along lines 4-4.
FIG. 4A is a diagrammatic perspective view of a present disclosure gear system embodiment.
FIG. 5 is a cross-sectional diagrammatic view of a present disclosure hybrid-electric propulsion system embodiment.
FIG. 6 is a cross-sectional diagrammatic view of a present disclosure hybrid-electric propulsion system embodiment

### DETAILED DESCRIPTION

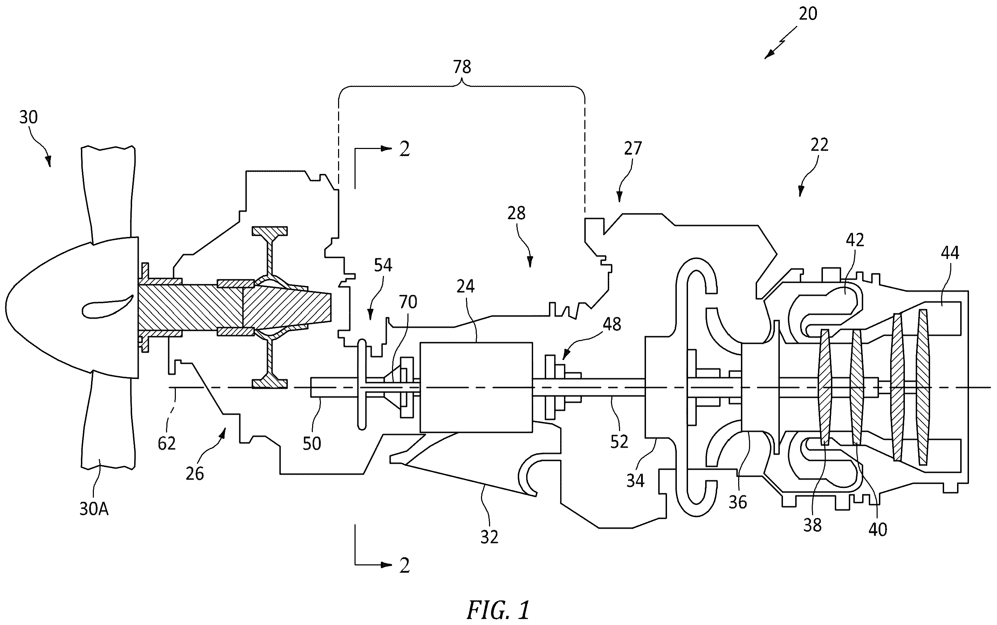

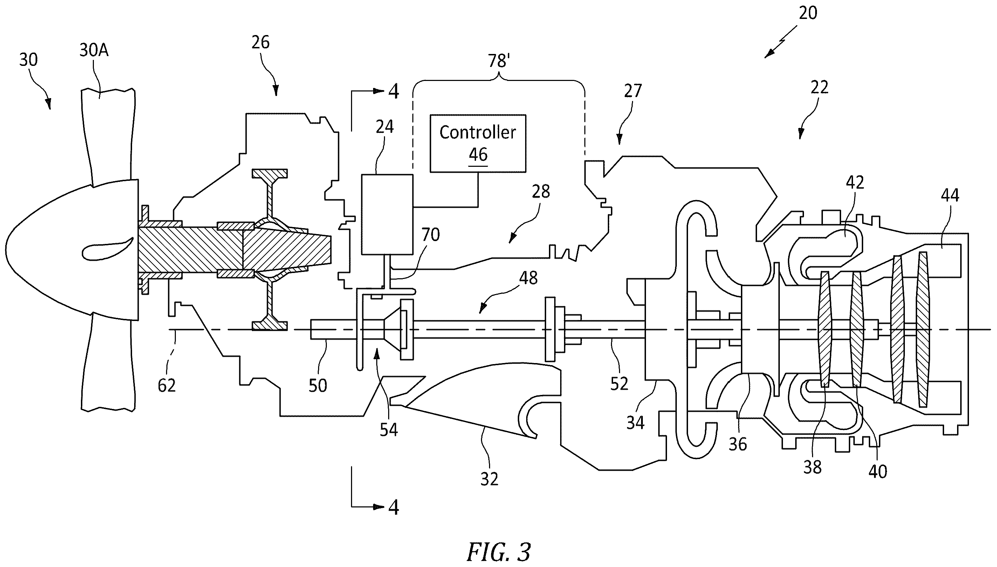

FIGS. 1 and 3 are diagrammatic views of an aircraft hybrid-electric propulsion (HEP) system 20 that includes a gas turbine engine 22, an electric motor ("E-motor 24"), a gearbox 26, an accessory gearbox 27, an inlet case 28 and a propulsion unit 30.

The inlet case 28 includes an inlet duct 32. The gas turbine engine 22 includes a low pressure compressor (LPC) 34, a high pressure compressor (HPC) 36, a high pressure turbine (HPT) 38, a low pressure turbine (LPT) 40, and a combustor 42. The gas turbine engine 22 also includes a power turbine 44. The present disclosure is not limited to the gas turbine engine 22 shown in FIGS. 1 and 3 and may be used with other gas turbine engine configurations. The gas turbine engine 22 is in communication with the gearbox 26 and the gearbox 26 is in communication with the propulsion unit 30. The propulsion unit 30 shown in FIGS. 1 and 3 includes a propeller 30A. The present disclosure is not limited to use with a propulsion unit 30 that includes a propeller 30A.

The terms "forward" and "aft" are used herein to indicate the relative position of a component or surface. As core gas air passes through the gas turbine engine 22 diagrammatically shown in FIGS. 1 and 3, the compressor sections 34, 36 are "forward" of the turbine sections 38, 40 and the power turbine 44 is "aft" of the turbine sections 38, 40. The terms "upstream" and "downstream" used herein refer to the direction of a gas flow passing through a gas path of the turbine engine 22. It should also be noted that the terms "radial" and "circumferential" are used herein with respect to the rotational axis of the turbine engine 22.

The E-motor 24 may be an alternating current (AC) motor that can be controlled to rotationally drive a component, or can be controlled to produce electrical energy; i.e., function as an electrical generator. In some embodiments, the present disclosure may include components associated with the operation of the E-motor 24, including one or more of an electrical energy storage device (e.g., a battery - not shown), a battery electrical management system (not shown), an E-motor controller (not shown).

FIG. 3 diagrammatically illustrates the present disclosure HEP system 20 including a controller 46. The term "controller" as used herein refers to a device that may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the present disclosure system (or a system component) to accomplish the same algorithmically and/or coordination of system components. The controller 46 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The present disclosure is not limited to any particular controller architecture unless specifically stated herein. A non-limiting example of an HEP system 20 device that functions as a controller 46 or incorporates a controller 46 is a FADEC. Other devices (e.g., an E-motor controller, which may include an inverter, rectifying circuits, and the like) may also include a controller, and the various controllers may be in communication with one another to accomplish the functionality described herein. The present disclosure is not limited to any particular controller architecture

The gearbox 26 is directly or indirectly engaged with, and is driven by, the gas turbine engine 22. An example of a gearbox that is directly engaged with the gas turbine engine 22 is one wherein a gearbox input is connected to an engine shaft and rotates at the same speed as the engine shaft. An example of a gearbox that is indirectly engaged with the gas turbine engine 22 is one wherein a gearbox input and the engine shaft are both connected to a gear arrangement (not shown) and the engine shaft and gearbox input rotate at different rotational speeds. In the gas turbine engine 22 shown in FIGS. 1 and 3, an engine output shaft 48 (e.g., a LPT spool speed input shaft) extending from the power turbine 44 is an example of an engine shaft that may be directly or indirectly engaged with the gearbox 26.

The present disclosure engine output shaft 48 shown in FIGS. 1 and 3 includes an input section 50, an output section 52, and a gear system 54. The output section 52 is directly engaged with, and is driven by, the gas turbine engine 22. The input section 50 may engage with and drive the gearbox 26.

The gearbox 26 may be configured as a reduction gearbox that accepts an input rotational drive from the engine output shaft 48 at a first rotational speed and at a first torque and produces an output rotational drive to the propulsion unit 30 at a second rotational speed and at a second torque, wherein the first rotational speed is greater than the second rotational speed and the second torque is greater than the first torque.

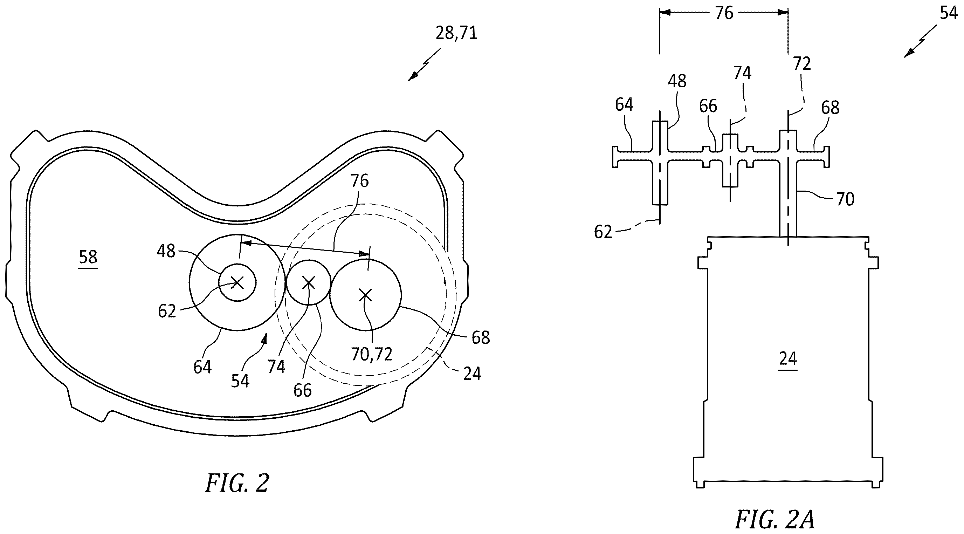

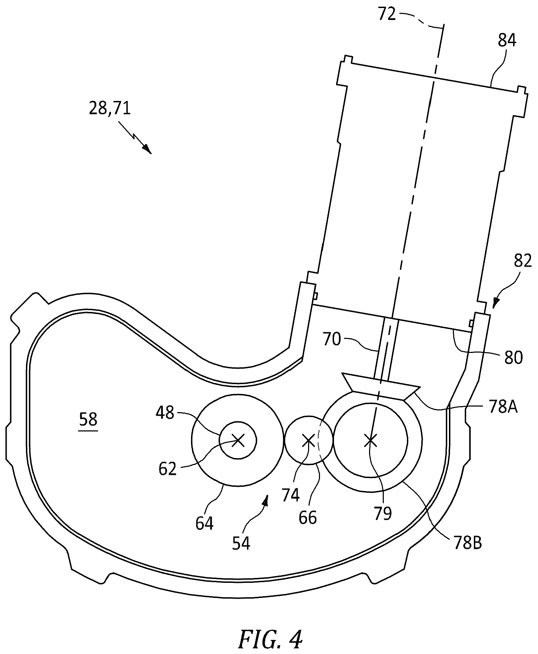

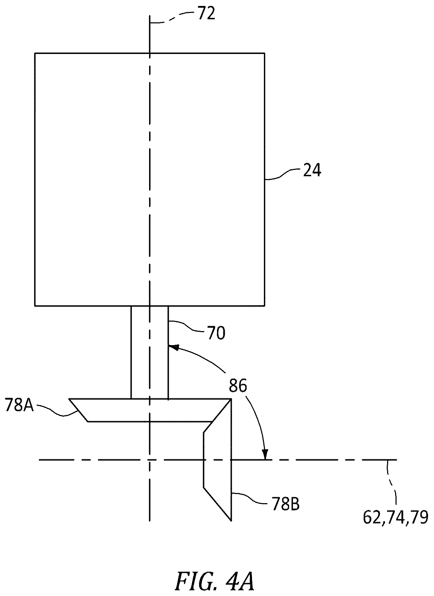

Referring to FIGS. 2 and 4, the inlet case 28 is depicted forming a cavity 58. The engine output shaft 48 is arranged within the cavity 58 of the inlet case 28 and extends forward and aft within the inlet case 28 along a first rotational axis 62 of the engine output shaft 48.

The E-motor 24 of the present disclosure is configured to engage with the engine output shaft 48 through the gear system 54. For example, with reference to FIGS. 2 and 2A, the gear system 54 includes a drive gear 64, an intermediary gear 66, and a motor gear 68. The drive gear 64 is mounted on the input section 50 of the engine output shaft 48. The drive gear 64 is engaged with the intermediary gear 66. The motor gear 68 is mounted on a motor shaft 70 of the E-motor 24. The motor gear 68 is engaged with the intermediary gear 66.

During at least one mode of operation for the present disclosure HEP system 20 (discussed in further detail below), rotational drive from the E-motor 24 is supplied to the motor shaft 70, and the motor shaft 70 transfers the rotational drive to the motor gear 68. Rotational drive is subsequently transferred to the intermediary gear 66 via the motor gear 68. The intermediary gear 66 transfers rotational drive to the drive gear 64, and the drive gear 64 transfers the rotational drive to the engine output shaft 48 for input to the gearbox 26.

In other modes of operation for the present disclosure HEP system 20 (discussed in further detail below), the engine output shaft 48 may transfer rotational drive to the drive gear 64, and the drive gear 64 transfers the rotational drive to the intermediary gear 66. Rotational drive is subsequently transferred to motor gear 68 via the intermediary gear 66. The motor gear 68 transfers the rotational drive to the motor shaft 70.

The drive gear 64, motor gear 68, and/or intermediary gear 66 may comprise spur gears, though other types of gears are not meant to be precluded. In some embodiments, the drive gear 64 may be directly engaged to the motor gear 68 for the transfer of rotational drive directly between the engine output shaft 48 and the motor shaft 70. In such embodiments, the rotation of the motor shaft 70 may be in a direction opposite the rotational direction of engine output shaft 48.

Referring now to FIGS. 1, 2 and 2A, an engine assembly 71 according to an embodiment of the present disclosures is illustrated. The engine assembly 71 includes the engine output shaft 48, the E-motor 24 and the gear system 54 disposed within the cavity 58 of the inlet case 28. The E-motor 24 extends axially (e.g., horizontally) along a second rotational axis 72 and the intermediary gear 66 is arranged within the cavity 58 of the inlet case 28 to extend along and rotate about an intermediary rotational axis 74. The first rotational axis 62, the second rotational axis 72, and the intermediary rotational axis 74 extend axially within the cavity 58 of the inlet case 28. The intermediary rotational axis 74 is parallel to the first rotational axis 62 and the second rotational axis 72. The second rotational axis 72 is parallel to the first rotational axis 62. The E-motor 24 is arranged within the cavity 58 of the inlet case 28 and is laterally offset from the engine output shaft 48. In such an arrangement, the first rotational axis 62 is offset from the second rotational axis 72 by a lateral distance 76 (See FIGS. 2 and 2A).

The placement of the E-motor 24 within the inlet case cavity 58 provides additional clearance 78 (See FIG. 1) between the gearbox 26 and accessory gearbox 27 for the placement of accessories and to accommodate installation and/or removal of the E-motor 24. Furthermore, the placement of the E-motor 24 within the inlet case cavity 58 maintains the E-motor 24 within the inlet case 28, offering additional protection of the E-motor 24 from harsh environmental conditions (e.g., salt water, sand, debris, high/low temperature gradients, etc.).

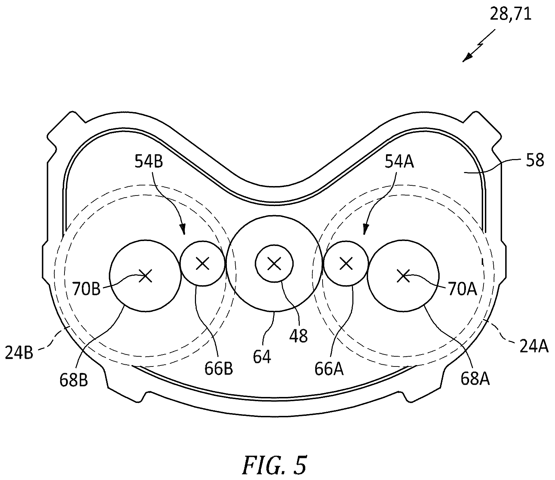

In some embodiments, referring now to FIG. 5, the cavity 58 of the inlet case 28 may facilitate the placement of a plurality of E-motors 24A and 24B which can be engaged with the engine output shaft 48. FIG. 5 illustrates (in dashed lines) a first E-motor 24A and a second E-motor 24B engaged with the engine output shaft 48. The first E-motor 24A is engaged with the engine output shaft 48 through a first gear system 54A, and the second E-motor 24B is engaged with the engine output shaft 48 through a second gear system 54B. The first gear system 54A includes the drive gear 64, a first intermediary gear 66A, and a first motor gear 68A. The first motor gear 68A is mounted with a first motor shaft 70A of the first E-motor 24A. The second gear system 54B includes the drive gear 64, a second intermediary gear 66B, and a second motor gear 68B. The second motor gear 68B is mounted with a second motor shaft 70B of the second E-motor 24B.

In some embodiments, referring now to FIGS. 3 and 4, the gear system 54 may include a bevel gear arrangement for the transfer of rotational drive in a direction which is angularly offset from the first rotational axis 62 of the engine output shaft 48. In such embodiments, the gear system 54 may comprise a first bevel gear 78A, a second bevel gear 78B, intermediary gear 66, and drive gear 64. The first bevel gear 78A may comprise the motor gear 68 (see e.g., FIGS. 2 and 2A) which is mounted to and rotatable with the motor shaft 70 along the second rotational axis 72. The first bevel gear 78A is engaged with the second bevel gear 78B. The second bevel gear 78B is engaged with the intermediary gear 66. The second bevel gear 78B is rotatable about a bevel gear rotational axis 79. The bevel gear rotational axis 79 may be parallel or substantially parallel to the intermediary axis 74 and/or the first rotational axis 62. The drive gear 64 is engaged with the intermediary gear 66. Hence, rotational drive from the E-motor 24 is supplied to the motor shaft 70, and the motor shaft 70 transfers the rotational drive to the first bevel gear 78A. The rotational drive is subsequently transferred to intermediary gear 66 via the first bevel gear 78A and the second bevel gear 78B. The intermediary gear 66 transfers rotational drive to the drive gear 64, and the drive gear transfers the rotational drive to the engine output shaft 48.

The engine assembly 71 of FIGS 3 and 4 includes the engine output shaft 48, the E-motor 24 and the gear system 54. The engine output shaft 48, the gear system 54, and at least a portion of the E-motor 24 are disposed within the cavity 58 of the inlet case 28. Referring to FIG. 4, a first end 80 of the E-motor 24 is supported within the cavity 58 by an inlet case accessory mount 82. The E-motor 24 extend radially (e.g., vertically) along the second rotational axis 72 between the first end 80 to a second end 84. The motor shaft 70 extends radially inward from the first end 80 of the E-motor 24 along the second rotational axis 72 towards the second bevel gear 78B disposed within the cavity 58. The E-motor 24 may extend within and protrude from the inlet case 28. The first bevel gear 78A is mounted to the motor shaft 70 and engages the second bevel gear 78B. The intermediary gear 66 is arranged within the inlet case 28, extending along and rotating about the intermediary rotational axis 74. The first rotational axis 62, the bevel gear rotational axis 79 and the intermediary rotational axis 74 extend axially within the cavity 58 of the inlet case 28. The intermediary rotational axis 74 is parallel to the first rotational axis 62 and/or the bevel gear rotational axis 79. With additional reference to FIG. 4A, the second rotational axis 72 is angularly offset from the first rotational axis 62, the bevel gear rotational axis 79, and/or the intermediary rotational axis 74 by an offset angle 86. The offset angle 86 may be an acute angle. For example, the offset angle 86 may be a 90-degree angle, such that the second rotational axis 72 is perpendicular to the first rotational axis 62 and/or the intermediary rotational axis 74.

The E-motor 24 and inlet case accessory mount 82 of FIG. 4 provides a self-supporting configuration for the E-motor 24. In such a configuration, the E-motor 24 is arranged in rotational engagement with the gear system 54 of the cavity 58 without needing any additional structural support which would otherwise be included in conventional overhung accessories mounted on the gearbox of a propulsion system. Due to the vertically-installed configuration of the E-motor 24, the installation footprint of the E-motor 24 is minimized, providing additional clearance 78' between the gearbox 26 and the accessory gearbox 27 for the placement of accessories. The vertical orientation of the E-motor 24 further provides increased access to the E-motor 24 for removal and maintenance.

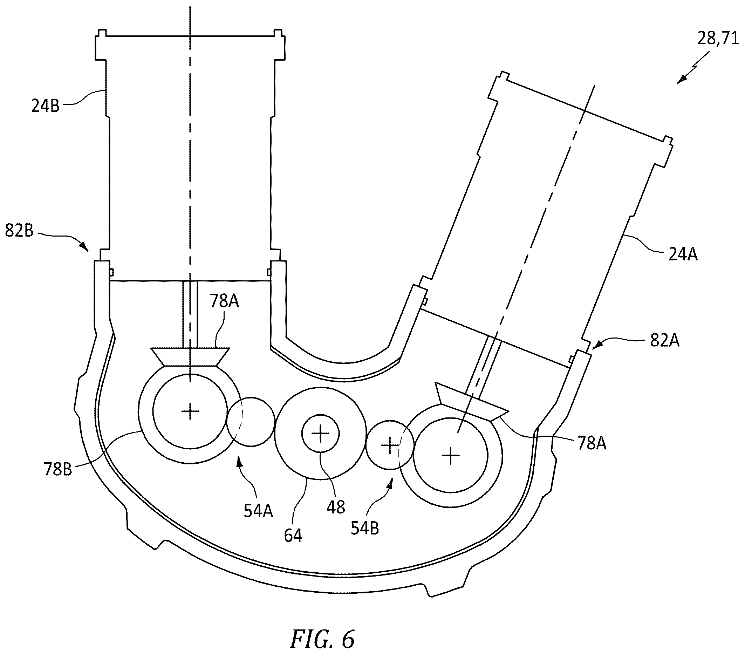

In some embodiments, referring now to FIG. 6, the cavity 58 of the inlet case 28 may facilitate the placement of a plurality of E-motors 24A and 24B which can be engaged with the engine output shaft 48. FIG. 6 illustrates a first E-motor 24A and a second E-motor 24B engaged with the engine output shaft 48 and extending vertically within at least a portion of the cavity 58. The first E-motor 24A is mounted to the cavity 58 at a first inlet case accessory mount 82A and the second E-motor 24B is mounted to the cavity 58 at a second inlet case accessory mount 82B, disposed within the cavity 58 opposite the first inlet case accessory mount 82A. Each of the plurality of E-motors 24A and 24B are engaged with the engine output shaft 48 through respective gear systems 54A and 54B. The gear system(s) 54A and 54B includes the drive gear 64, the intermediary gear 66, the first bevel gear 78A and the second bevel gear 78B.

Within the engine assembly of the present disclosure, the gear system 54 is configured to engage the E-motor 24 using the drive gear 64. The drive gear 64, the intermediary gear 66, and the motor gear 68 are configured to produce little to no difference between input and output rotational speed and torque; e.g., a drive gear rotational speed (Sₒ) and torque (Tₒ) is intended to the substantially the same as a motor gear rotational speed (Sᵢ) and torque (Tᵢ); e.g., (Sᵢ ≈ Sₒ) and (Tᵢ ≈ Tₒ). The engine assembly 71 of the present invention may therefore reduce gear sizing compared to HEP systems incorporating an electric motor arrangement engaged with a reduction gearbox, resulting in decreased overall weight of the HEP system 20 compared to convention electric motor gear assemblies installed between a reduction gearbox and an accessory gearbox.

In a first mode of operation for the present disclosure HEP system 20 (which may be referred to as "unassisted operation"), the gas turbine engine 22 provides rotational drive to the gearbox 26 through the engine output shaft 48. The rotational drive from the gas turbine engine 22 may be produced by the power turbine 44. The E-motor 24, which is mounted in any of the aforementioned configurations, is not operated in the first mode of operation to produce rotational drive or to produce electrical energy.

In a second mode of operation for the present disclosure HEP system 20 (which may be referred to as "assisted operation"), the gas turbine engine 22 provides rotational drive to the gearbox 26 through the engine output shaft 48 in the manner described above. In this second mode of operation, the E-motor 24 is controlled to produce rotational drive that is applied to the motor gear 68, and through the drive gear 64 to the engine output shaft 48. In this second mode of operation, rotational drive from both the gas turbine engine 22 and the E-motor 24 are provided to the engine output shaft 48 to drive rotation of the gearbox 26. The E-motor 24 may be controlled to provide rotational drive at various different segments during a flight.

In a third mode of operation for the present disclosure HEP system 20, the gas turbine engine 22 provides rotational drive to the gearbox 26 through the engine output shaft 48 in the manner described above. In this third mode of operation, the E-motor 24 is driven by the engine output shaft 48 and controlled to produce electrical energy. The electrical energy may be provided to other systems within the aircraft, including an electrical energy storage device (e.g., a battery) for storage therein. In this third mode of operation, rotational drive from the gas turbine engine 22 is provided to the gearbox 26 for output to the propulsion unit 30. The E-motor 24 may be controlled to produce electrical energy (e.g., operate as an electrical generator) at various different segments during a flight.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. An assembly (71) for a hybrid-electric propulsion (HEP) system (20) for powering an aircraft, the assembly (71) comprising:
an inlet case (28) forming a cavity (58);
an engine output shaft (48) disposed within the cavity (58) and extending axially along a first rotational axis (62);
a gearbox (26) in drive communication with the engine output shaft (48), the gearbox (26) configured to drive rotation of a propulsion unit (30);
an electric motor (24; 24A) in drive communication with the engine output shaft (48), wherein at least a portion of the electric motor (24; 24A) is disposed within the cavity (58); and
a gear system (54; 54A, 54B) configured to rotatably engage the electric motor (24; 24A) with the engine output shaft (48).

2. The assembly (71) of claim 1, wherein the assembly (71) is operable such that a rotational speed of the electric motor (24; 24A) is equal to a rotational speed of the engine output shaft (48), and a rotational output speed of the gearbox (26) is less than the rotational speed of the electric motor (24; 24A).

3. The assembly (71) of claim 1 or 2, wherein the gear system (54; 54A, 54B) includes
a drive gear (64) mounted on the engine output shaft (48) and rotatable about the first rotational axis (62);
an intermediary gear (66; 66A) rotatably engaged with the drive gear (64), the intermediary gear (66; 66A) is rotatable about an intermediary rotational axis (74); and
a motor gear (68; 68A) mounted on the electric motor (24; 24A), the motor gear (68; 68A) rotatably engaged with the intermediary gear (66; 66A), and the motor gear (68; 68A) is configured to rotate about a second rotational axis (72).

4. The assembly (71) of claim 3, wherein the first rotational axis (62) is parallel to the intermediary axis (74) or the second rotational axis (72).

5. A hybrid-electric propulsion (HEP) system (20) for powering an aircraft, comprising:
the assembly (71) of claim 1 or 2; and
a gas turbine engine (22) in drive communication with the engine output shaft (48).

6. The HEP system (20) of claim 5, wherein the HEP system (20) is configured to:
operate in a first mode of operation in which the gas turbine engine (22) is controlled to provide rotational drive to the engine output shaft (48) and the electric motor (24; 24A) is controlled to not operate; or
operate in a second mode of operation in which the gas turbine engine (22) is controlled to provide a first rotational drive to the engine output shaft (48) and the electric motor (24; 24A) is controlled to provide a second rotational drive to the engine output shaft (48).

7. The HEP system (20) of claim 5, wherein the HEP system (20) is configured to:
operate in one of a first mode of operation, or a second mode of operation, or a third mode of operation at a time;
wherein in the first mode of operation, the gas turbine engine (22) is controlled to provide rotational drive to the engine output shaft (48) and the electric motor (24; 24A) is controlled to not operate; and
wherein in the second mode of operation, the gas turbine engine (22) is controlled to provide a first rotational drive to the engine output shaft (48) and the electric motor (24; 24A) is controlled to provide a second rotational drive to the engine output shaft (48); and
wherein in the third mode of operation, the gas turbine engine (22) is controlled to provide rotational drive to the engine output shaft (48) and the electric motor (24; 24A) is controlled to produce electrical energy.

8. The HEP system (20) of claim 7, wherein in the third mode of operation the electric motor (24; 24A) is driven by the engine output shaft (48).

9. A hybrid-electric propulsion (HEP) system (20) for powering an aircraft, comprising:
the assembly (71) of claim 1 or 2;
a gas turbine engine (22) in drive communication with the engine output shaft (48); and
a controller (46);
wherein the HEP system (20) is configured to operate in a first mode of operation, or a second mode of operation, one at a time, wherein:
the first mode of operation includes controlling the gas turbine engine (22) to provide rotational drive to the reduction gearbox (26) through the engine output shaft (48), and controlling the electric motor (24; 24A) to not operate; and
the second mode of operation includes controlling the gas turbine engine (22) to provide a first rotational drive to the reduction gearbox (26) through the engine output shaft (48) and controlling the electric motor (24; 24A) to provide a second rotational drive to the reduction gearbox (26) through the engine output shaft (48); and
wherein the controller (46) is in communication with the electric motor (24; 24A) and a non-transitory memory storing instructions, wherein the instructions when executed cause the system controller (46) to selectively operate the HEP system (20) in one of the first mode of operation or the second mode of operation, and to subsequently operate the HEP system (20) in another of the first mode of operation or the second mode of operation.

10. The HEP system (20) of any of claims 5 to 9, wherein the electric motor (24; 24A) extends axially along a second rotational axis (72) disposed within the cavity (58).

11. The HEP system (20) of claim 10, wherein
the second rotational axis (72) is laterally offset from the engine output shaft (48); and
the second rotational axis (72) is parallel to the first rotational axis (62).

12. The HEP system (20) of any of claims 5 to 9, wherein
the electric motor (24; 24A) is supported within the inlet case (28) by an inlet case accessory mount (82; 82A); and
the electric motor (24; 24A) extends radially along a second rotational axis (72), the electric motor (24; 24A) extending within and protruding from the inlet case (28).

13. The HEP system (20) of claim 12, wherein
the gear system (54; 54A, 54B) includes a first bevel gear (78A) and a second bevel gear (78B);
the first bevel gear (78A) mounted to and rotatable with the electric motor (24; 24A) along the second rotational axis (72), and the second bevel gear (78B) engaged with the first bevel gear (78A), the second bevel gear (78B) rotatable with the engine output shaft (48); and
the second rotational axis (72) is angularly offset from the first rotational axis (62).

14. The HEP system (20) of any of claims 5 to 13, further comprising
a second electric motor (24B), wherein at least a portion of the second electric motor (24B) is disposed within the cavity (58); and
the gear system (54; 54A, 54B) is configured to rotatably engage the second electric motor (24B) with the engine output shaft (48).

15. The HEP system (20) of any of claims 5 to 14, wherein the gear system (54; 54A, 54B) comprises
a drive gear (64) mounted on the engine output shaft (48) and rotatable about the first rotational axis (62);
an intermediary gear (66; 66A) rotatable about an intermediary rotational axis (74), the intermediary gear (66; 66A) rotatably engaged with the drive gear (64); and
a motor gear (68; 68A) mounted on the electric motor (24; 24A), the motor gear (68; 68A) rotatably engaged with the intermediary gear (66; 66A), and the motor gear (68; 68A) is configured to rotate about a second rotational axis (72).
